(19) **Europäisches Patentamt European Patent Office Office européen des brevets**

(11) **EP 1 098 166 B1**

(12) **EUROPEAN PATENT SPECIFICATION**

(45) Date of publication and mention of the grant of the patent:
**03.12.2008 Bulletin 2008/49**

(51) Int Cl.:
***G01B 11/06*** *(2006.01)*

(21) Application number: **00122582.0**

(22) Date of filing: **17.10.2000**

(54) **Method and apparatus for thickness measurement on transparent films**

Verfahren und Vorrichtung zur Dickenmessung von durchsichtigen Filmen

Procédé et dispositif de mesure de l'épaisseur de films transparents

(84) Designated Contracting States:
**DE FR GB**

(30) Priority: **08.11.1999 US 164162 P**

(43) Date of publication of application:
**09.05.2001 Bulletin 2001/19**

(73) Proprietor: **Leica Microsystems CMS GmbH 35578 Wetzlar (DE)**

(72) Inventors:
• **Ganser, Michael 35398 Giessen (DE)**

• **Weiss, Albrecht 35440 Linden (DE)**

(74) Representative: **Reichert, Werner Franz Leica Microsystems GmbH Corporate Patents and Trademarks Postfach 20 20 35530 Wetzlar (DE)**

(56) References cited:
**EP-A2- 0 644 399    US-A- 4 844 617 US-A- 4 920 273    US-A- 5 696 589**

**Description**

The invention concerns a method and an apparatus for thickness measurement on transparent films, having the features of independant Claims 1 and 5.

The invention is used for thickness measurement on transparent, partially reflective films. It is intended In particular to be used In blood analysis, which is based, Inter alla, on the quantitative evaluation of fluorescence intensities of a blood film. An essential prerequisite for the evaluation is an accurate knowledge of the thickness of the blood film.

In blood analysis, the blood is present In a special single-use microcuvette made of glass or plastic or a glass/plastic combination. Production-related tolerances In the dimensions of the single-use microcuvette make it necessary to measure the thickness of the blood film at different points on the already filled single-use microcuvette.

It would be conceivable to monitor the thickness tolerances of the single-use microcuvette, for example, with a mechanical feeler. The thickness of the blood film is determined, however, by the inside dimensions of the single-use microcuvette, which may have tolerance deviations different from those of the outside dimensions. But because the feeler can sense only the outside dimensions, It is unsuitable for determining the thickness of the blood film. Another method for monitoring the thickness tolerances of the single-use microcuvette consists i-n an interferometric measurement of the blood film. This is done, for example, by using an interferometer arrangement In a refleded-light microscope whose illumination tight is conveyed out of a spectrometer. The filled single-use microcuvette is placed, in the interferometer beam, on the object stage of the microscope. The microscope illumination light is reflected and interfered with at all the interfaces of the single-use microcuvette. The measurement is performed for various wavelengths of the illumination light furnished by the spectrometer. If the refractive index is known, the thickness of the individual films can be determined from the interference values as a function of wavelength. In analyzing the measurements, however, it proves very difficult to separate out the light components reflected from the various interfaces. A further disadvantage is the need for a spectrometer, which is costly and requires a great deal of space.

EP-A2-0644399 discloses a method for measuring film thicknesses by illumination of an object having a transparent film. The illumination beam is guided through an objective onto the transparent film. The film is Imaged an a pinhole which allows the beam to enter a spectroscopic unit. The beam is diffracted and directed onto a CCD, where an interference waveform appears. The detected CCD signals are used for a calculation which, based on predetermined ranges for the film thicknesses, calculates a minimized deviation between theoretical and measured value for the film thickness,

US 4 644 617 discloses a confocal measuring microscope with automatic focusing. A thickness measurement of the object is not disclosed. The focus position is determined on basis of the maximum of intensity which occurs when the best confocal position is achieved.

US 5 696 589 discloses an optical non-contact profilometry system and a related method for measuring the profiles of a flat non-transparent object. The object is in a fixed z-position of an caliper optical beam which is focused on the object surface by an objective. A second caliper beam Is directed to the backside. The focus is determined by detecting the signal intensity of a two-field sensor. While the object is moved in a direction perpendicular to the optical axis, the profile of the first surface and the backside is measured.

US 4 920 273 discloses a z-axis measurement system for use with a television camera for detecting the surface location of an object. A patterned test image is projected on the surface, in the optimal configuration, a maximum light pattern energy is detected by an image sensor. The system does explicitly not rely on detail or image sharpness. A thickness measurement is not mentioned.

It is therefore the object of the present invention to describe a method and an apparatus for thickness measurement on transparent films, They are intended to be suitable, in particular, for transparent liquid films on a substrate or in a closed vessel, for example a microcuvette.

This object is achieved by the features of the Independent claims. Advantageous developments are described by the dependent clams.

According to the present invention, a focussing aid Is arranged In an illumination beam of an objective in a position conjugated with the focal plane. The focal plane is imaged on a camera. The focussing aid is imaged sharply on the camera only when a partially reflective interface of an object is in the focal plane. The sharpness of the Image of the focusing aid, monitored with the camera, thus serves as a "focus indicator". The invention makes use of this to determine the films thicknesses.

The illumination beam is directed through the objective onto an object that has a transparent film. The object used is, for example, a single-use microcuvette for blood analysis that is filled with a transparent blood film. Alternatively, it would also be possible to use an object support that carries a transparent blood film.

By displacing the object in the Z direction relative to the objective, the focal plane of the objective is displaced stepwise through the object. The values of the stop positions $Z_i$ are measured. At each stop position, a camera image is recorded and its focal score is determined, the image of the structure of the focusing aid being used as sharpness indicator.

For optimum image evaluation, it is advantageous if the structure on the focusing aid is at least one bar whose bar length is a multiple of the bar width; the bar width must be a multiple of the resolution capability of the objective and the camera. Multiple bars can also be used. It is advantageous to use a cross having, for the individual ends of the cross, the dimensions discussed for the bar. The cross can be adapted to different pixel widths and heights.

A low focus score results from unsharpness of the image; a high focus score results from good sharpness of the image. In other words, when the image of the structure of the focusing aid appears sharp in the camera image, an interface of the single-use microcuvette is in the focal plane, and the focus score has a relative maximum.

The maxima of the focus scores are therefore determined. The positions $Z_i$ having maximal focus scores are assigned to the locations of the various interfaces of the object. Interfaces are, for example in the case of a microcuvette filled with liquid, the air-glass transitions, the glass-liquid transitions, the liquid-glass transitions, and the glass-air transitions.

The various interfaces differ greatly in terms of reflectivity. Glass-air interfaces, for example, reflect more strongly (by a factor of about 10) than glass-liquid interfaces. Because the reflection intensities are incorporated into the calculation when identifying the focus scores, it is possible to draw conclusions from the magnitudes of the identified focus scores as to the kind of interface, and thus to make an assignment.

The thickness of the transparent film, e.g. of the liquid in the microcuvette, is then calculated from the difference between the positions $z_i$ assigned to their interfaces $z_1$, $z_2$. The thickness d is calculated as $d = (z_1 - z_2) \cdot n_{film}$, where $n_{film}$ is the refractive index of the film. Multiplying by $n_{film}$ takes into account the optical path length modified by the refractive index of the film.

In assigning the maxima of the focus scores to the interfaces of the object having the film being measured, certain preliminary information concerning the nature and/or approximate location of the interfaces and the film is utilized. This information yields further possibilities for making the assignment. For example, the following variants are possible:

- The displacement path selected for the object is so long that the first interface is always acquired, and the first maximum of the focus scores can thus be assigned to the first interface. This is particularly advantageous for an object with a sandwich structure (i.e. having multiple material layers), for example a microcuvette.

- The interfaces of particular interest, for example the inner walls of a microcuvette, are predefined with sufficient accuracy in terms of their expected location. These may be manufacturer's tolerance data concerning the dimensions of the microcuvette. If, on the basis of these data, the outer interfaces are at a sufficient distance from the inner interfaces of the microcuvette, a direct assignment of the maxima of the focus scores to the inner interfaces is possible. The displacement travel of the object and the number of camera images can then also be reduced. This offers the advantage that measurement times can be considerably reduced. The method is thus particularly suitable for routine laboratory investigations.

The method according to the present invention can reliably be used for thickness measurement on transparent films of all kinds. The transparent films can be:

- self-supporting solid films in air or liquid; or
- solid or liquid films on a substrate (e.g. clinical smears on a glass slide); or
- solid or liquid films on a substrate having an additional transparent covering layer (sandwich structure).

The films, the substrate, and any covering layers must have smooth surfaces. The interfaces of the films must be only partially reflective, i.e. they can have very small differences in refractive index. Even the low levels of reflection resulting from these interfaces are sufficient for automatic image evaluation using image analysis as described by the method according to the present invention.

The method and the apparatus according to the present invention are explained below with the aid of exemplary embodiments and with reference to the schematic drawings in which:

*FIG. 1* shows an apparatus for film thickness measurement;
*FIG. 2* shows a detail view of a microcuvette with schematic light intensities at the interfaces;
*FIG. 3* shows a measurement series of camera images with image scores that vary as a function of the Z position;
*FIG. 4* shows a diagram of a measurement series of focus scores as a function of the Z position; and
*FIG. 5* shows a diagram of an analytical function for a measurement series of focus scores as a function of the Z position.

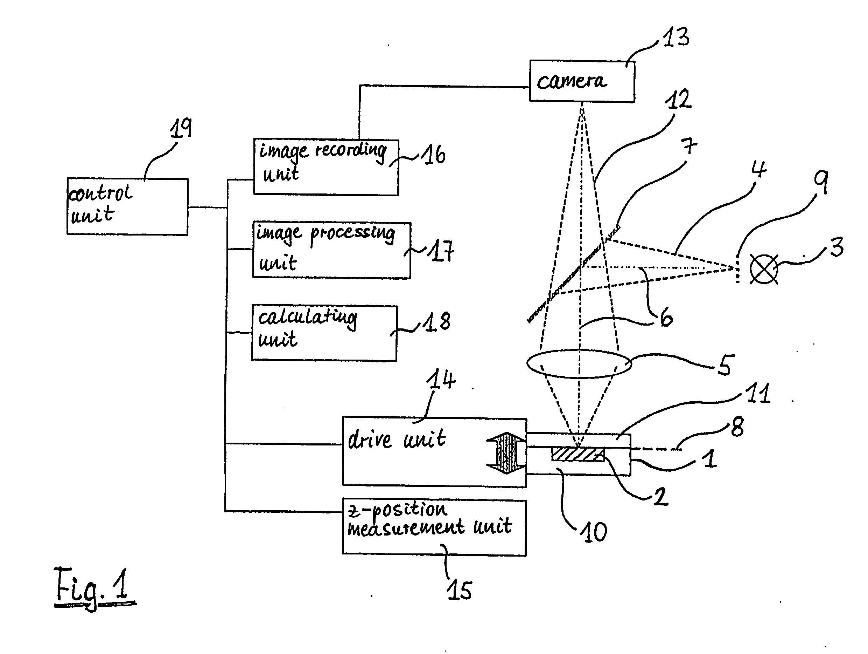

*FIG. 1* shows an apparatus for carrying out the method according to the present invention. What is being examined is an object 1 that has a transparent film 2 whose thickness is to be determined. An illumination beam 4 proceeds from a light source 3 and is directed through an objective 5 onto object 1; optical axis 6 of illumination beam 4 is oriented perpendicular to film 2. Deflection of illumination beam 4 toward object 1 takes place in a beam splitter 7. In illumination beam 4, a focusing aid 9 equipped with structures is arranged in a location conjugated with focal plane 8 of objective 5.

In the depiction, focal plane 8 lies at the upper interface of a transparent film 2. This transparent film 2 is enclosed in object 1. For that purpose, object 1 comprises a baseplate 10 which has a cavity in which transparent film 2 is located. Resting on baseplate 10 is a transparent cover 11 that sealingly closes off the cavity having transparent film 2.

An imaging beam 12 proceeds from the upper interface of transparent film 2, i.e. from focal plane 8. It passes through beam splitter 7 and is directed onto a camera 13 that is located in a position conjugated with focal plane 8.

The structure of focusing aid 9 is sharply imaged onto camera 13 with imaging beam 12 only if focal plane 8 lies in an interface of object 1 (as shown in the depiction). If focal plane 8 lies outside an interface of object 1, the structure of focusing aid 9 appears unsharp in the camera image. The invention makes use of this fact.

Object 1 is joined to a drive unit 14 with which object 1 can be displaced in the Z direction relative to objective 5. As object 1 is displaced, focal plane 8 can be passed in succession through all the interfaces of object 1. A sharp image is produced on camera 13 only when passing through an interface. From the difference between the Z positions associated with the specific interfaces, a desired film thickness can then be determined. For this purpose, drive unit 14 is joined to a Z-position measurement unit 15 which measures the current position $z_i$ of object 1.

Camera 13 is connected to an image recording unit 16, and the latter in turn to an image processing unit 17 and a calculating unit 18. Drive unit 14, Z-position measurement unit 15, image recording unit 16, image processing unit 17, and calculation unit 18 are connected to a control unit 19 with which execution of the process steps is controlled.

Execution of the method according to the present invention will be described below with reference to *FIG. 1.*

Object 1 is illuminated with illumination beam 4 guided through objective 5; object 1 is in an initial position in which, in this example, focal plane 8 lies above the uppermost delimiting surface of transparent covering 11. The image of camera 13 is recorded by image recording unit 16. Since focal plane 8 is not located in a partially reflective interface of object 1, focusing aid 9 is imaged unsharply on camera 13. A focus score $f(z_i)$ for the recorded camera image is determined using image processing unit 17. $z_i$ indicates the current position of object 1, which is determined using Z-position measurement unit 15.

This procedure of recording a camera image and determining an associated focus score $f(z_i)$ is then performed for various positions $z_i$ of object 1 relative to objective 5.

This is done by displacing object 1 stepwise in the direction of objective 5 so that it successively occupies discrete positions $z_i$. In each stop position $z_i$, a camera image is recorded using camera 13 and image recording unit 16. At the same time, in each stop position $z_i$ the associated measured value for the position occupied by object 1 is identified. Object 1 is displaced stepwise relative to objective 5 until focal plane 8 has at least passed through the lower interface of transparent film 2.

For each camera image recorded in the individual stop positions $z_i$, image processing unit 17 is used to identify a focus score $f(z_i)$. The focus scores $f(z_i)$ thus obtained are evaluated using calculation unit 18, by determining the various maxima of the focus scores $f(z_i)$. Once determined, the maxima are assigned to the interfaces of object 1. A value of the associated $z_i$ position can then be assigned to each maximum.

The thickness of transparent film 2 is determined from the difference between the $z_i$ positions of the maxima that are assigned to the interfaces of transparent film 2; the film thickness d is calculated as $d = (z_1 - z_2) \times n_{film}$, where $n_{film}$ is the refractive index of the film.

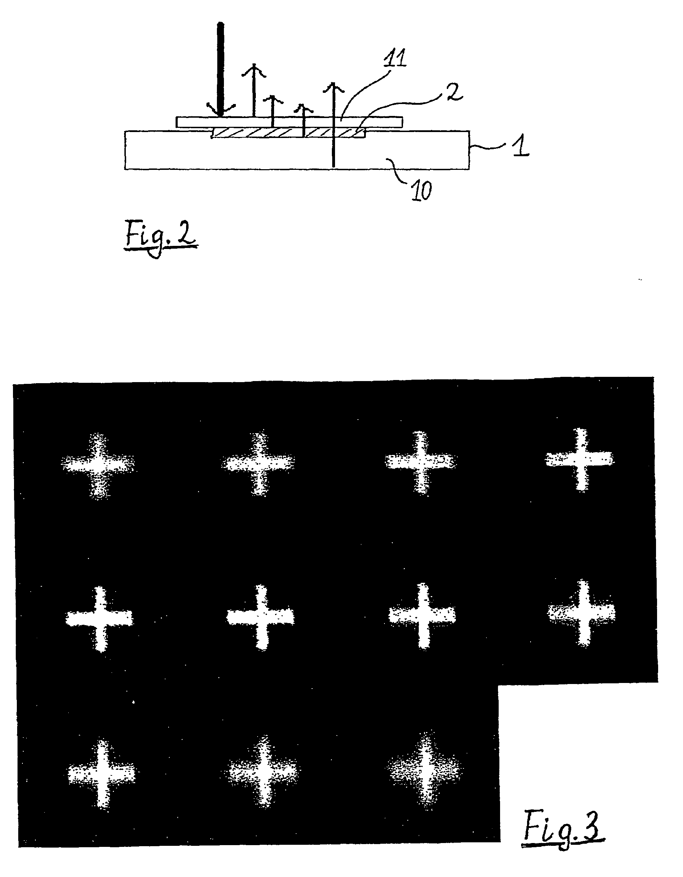

*FIG. 2* shows an enlarged detail of object 1. This is, for example, a section through a liquid-filled microcuvette, in turn depicting a baseplate 10 having a cavity that contains a transparent film 2, in this example a liquid. Baseplate 10 is covered by a transparent covering 11 in such a way that its cavity is sealingly closed off.

The depiction contains arrows whose size and line thickness schematically represent, by their direction and intensity, the reflected light components occurring at the individual interfaces of object 1. The reflected light components are symbolized by the upward-pointing arrows, and the illumination light by the thick arrow pointing downward. This graphically indicates that the strongest reflections occur at the glass-air interfaces, i.e. at the top and bottom sides of object 1. The reflected light components are substantially smaller at the upper and lower interfaces of the transparent liquid film that is being measured. It is evident that the various interfaces differ greatly in terms of their reflectivity: glass-air transitions reflect more strongly, by a factor of about 10, than glass-liquid transitions. Since it is possible, when determining the focus score, to evaluate the intensity of the camera image along with each recorded camera image, conclusions as to the location of the interfaces can be drawn from the values of the focus scores.

This is preferably done, when calculating the focus score, by taking into account the difference in intensity between each two adjacent pixels. This difference must be created for the pixels of the rows and columns of the camera image. One suitable function for calculating the focus scores is, for example:

$$f(z_i) = \sum_n \sum_m \left( \left| I_n - I_m \right|^x \right), \text{ for } x > 1,$$

where n is the number of pixels per line and m the number of pixels per column. $I_n$ and $I_m$ respectively indicate the intensities of two adjacent pixels n, m. Because the exponent $x > 1$ is applied to the intensity differences $|I_n - I_m|$, the result of this function is that steep gradients are given greater significance than shallow ones; in other words, the function is nonlinear.

Image evaluation of the camera images will be explained with reference to *FIG. 3*, which shows a measurement series of camera images recorded for various $z_i$ positions of object 1. It is evident that a cross was used as the structure of focusing aid 9.

In the individual camera images, the cross is imaged with different degrees of sharpness and brightness, i.e. with differing light intensity. Since focusing aid 9 is imaged sharply on the camera only if focal plane 8 is located in an interface of object 1, the intensity and sharpness of the cross in the camera image serve as the focus criterion. The cross must therefore be considerably larger in relation to the pixel widths and heights of the camera.

In the first camera image (top left), the cross appears extremely unsharp, meaning that focal plane 8 is located far away from an interface of object 1. With camera images 2, 3, and 4 (proceeding to the right), the sharpness of the cross progressively improves. This means that at the positions $z_i$ occupied in these images, focal plane 8 was moved progressively closer to an interface of object 1. The fifth camera image (left, second row) shows the greatest sharpness for the cross of focusing aid 9; for all further camera images, the cross again becomes less sharp. The conclusion from this is that camera image 5 was recorded in a $z_i$ position in which an interface of object 1 lay in focal plane 8.

In order to circumvent this visual assessment of image sharpness, a focus score $f(z_i)$ is determined for each camera image using the function described above. The highest focus score $f(z_i)$ is calculated for camera image 5, while correspondingly lower values for $f(z_i)$ are found for the other camera images in accordance with their sharpness and light intensity.

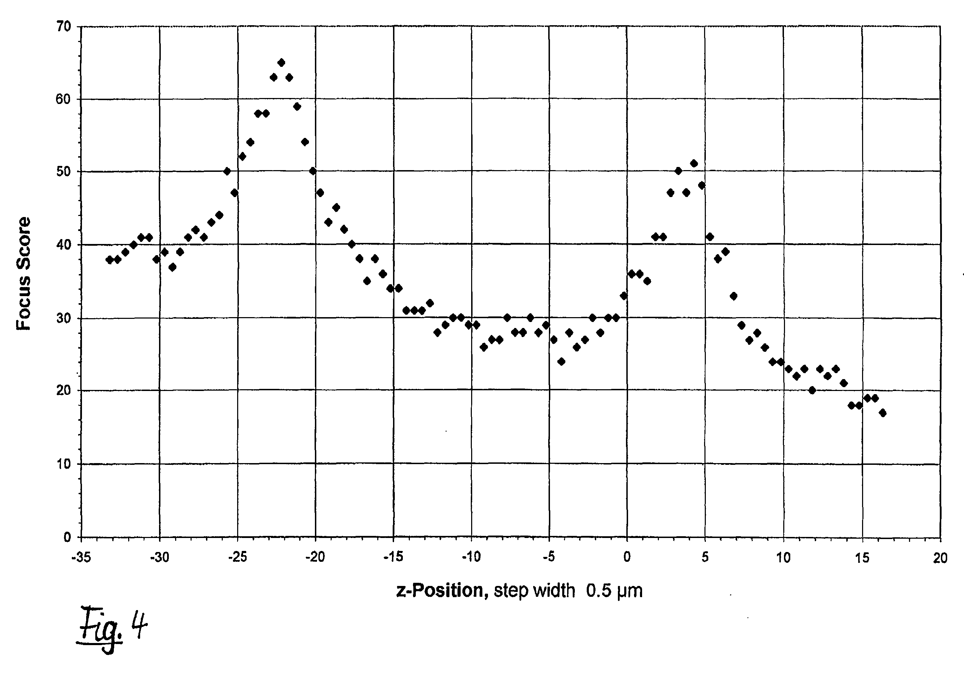

*FIG. 4* shows a diagram of a measurement series of calculated focus scores as a function of stop positions $z_i$ of object 1. The focus scores shown exhibit maximum values for two ranges of positions $z_i$. At the left maximum, one focus score itself is obviously the maximum. At the right maximum, the measured focus scores cluster around the actual maximum; in other words the position of maximum image sharpness was not stopped at. Determination of the actual maxima of the focus scores can therefore be greatly improved with a sufficiently small interval when displacing object 1 with respect to objective 5. The thickness of the film being investigated is then calculated from the difference between the two maxima. The maxima depicted in *FIG. 4* lie approximately 30 $\mu$m apart. The two maxima shown here were unequivocally associated, in a measurement, with the interfaces of transparent film 2 that is being measured, so that the thickness of transparent film 2 is thus determined.

It has been assumed up to now that in order to improve the resolution when determining the maxima of the focus scores, the greatest possible number of measurements should be made, with short distances between the individual positions $z_i$. The disadvantages of this, however, are on the one hand that the measurement takes a great deal of time because of the large number of individual measurements, and on the other hand that very large volumes of data must be processed.

In an advantageous development, the method is therefore carried out using only relatively few positions $z_i$. An analytical function is then created from the small number of focus scores $f(z_i)$ obtained.

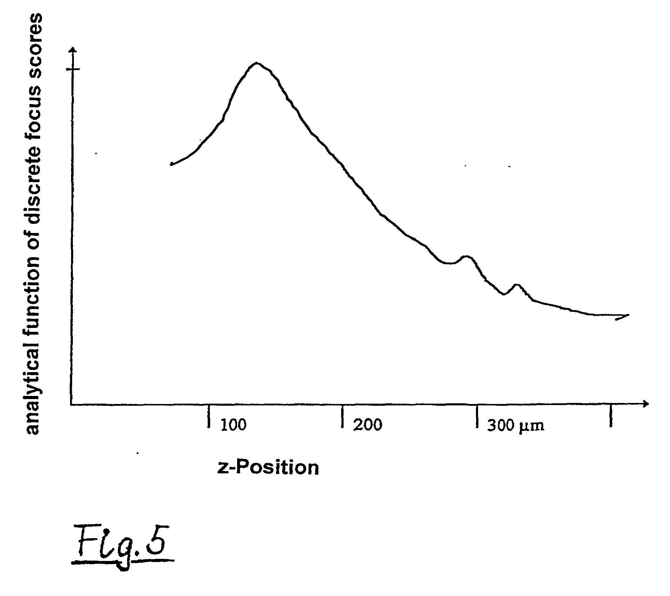

*FIG. 5* shows one example of such an analytical function. The left portion of the curve shows a pronounced maximum of the focus score function, and the right portion of the curve has two small maxima a short distance apart. As has already been explained with reference to *FIG. 2*, the strongest reflections and thus also the highest focus scores are produced by the air-glass transitions of object 1. The two small maxima of the focus score curve thus correspond to the glass-liquid transitions of the upper and lower interfaces of transparent liquid film 2 in object 1. From the analytical function depicted here, it is therefore possible to determine the two smaller maxima with high accuracy, calculate their associated positions $z_i$ and, by taking the difference between the two associated positions $z_i$, determine the film thickness of transparent liquid layer 2 with high accuracy. Because of the smaller number of camera images and the shorter calculation time, this method operates much faster.

An additional decrease in calculation outlay is attained by calculating an approximating function F(z), in each case only in the vicinity of the maximum focus score $F_n(z_i)$. Each approximating function F(z) is calculated using only those focus scores $F_n(z_i)$ whose adjacent focus scores $F_{n-m}(z_i)$ and $F_{n+m}(z_i)$ have smaller values, $m \geq 1$ defining the magnitude of the vicinity. With this method, a different approximating function F(z) can be calculated for each local maximum of the focus scores $F(z_i)$. Since only a few focus scores $F(z_i)$ are necessary for approximation purposes, the calculation outlay is greatly reduced.

The present invention was described with reference to exemplary embodiments. It is, however, obvious to any person skilled in this art that modifications and variations can be made without thereby leaving the range of protection of the Claims set forth below.

List of reference characters

1: Object
2: Transparent film
3: Light source
4: Illumination beam
5: Objective
6: Optical axis
7: Beam splitter
8: Focal plane
9: Focusing aid
10: Baseplate
11: Transparent covering
12: Imaging beam
13: Camera
14: Drive unit
15: Z-position measuring unit
16: Image recording unit
17: Image processing unit
18: Calculation unit
19: Control unit

**Claims**

1. A method for thickness measurement on transparent films, including illumination of an object (1), having a transparent film (2), by an illumination beam (4) that is guided through an objective (5) and has an optical axis (6) oriented perpendicular to the transparent film (2), **characterized by** the following steps:

  a) providing a focusing aid (9) equipped with structures being arranged in the illumination beam (4), and a camera (13) being arranged in an imaging beam (12), in positions conjugated with the focal plane (8) of the objective (5);
  b) stepwise displacement of the object (1), parallel to the optical axis (6), relative to the objective (5) in the Z direction to discrete positions $z_i$;
  c) recording of a camera image at each stop position $z_i$, and measurement of the associated $z_i$ value;
  d) identification of a focus score $F(z_i)$, assigned to the respective position $z_i$, from each recorded camera image, whereby the image of the structure of the focussing aid is used as sharpness indicator,
  e) determination of the maxima of the focus scores $F(z_i)$;
  f) assignment of the maxima to the interfaces of the object (1); and
  g) determination of the thickness of the transparent film (2) enclosed in the object (1) from the difference between the two $z_i$ positions $z_1$, $z_2$ of the maxima assigned to its interfaces, the thickness d of the transparent film (2) being given by $d = (z_1 - z_2) - n_{film}$, where $n_{film}$ = the refractive index of the film.

2. The method as defined in Claim 1,
  **characterized by** the further steps:

  a) determination of an approximating function $F(z)$ from the discrete focus scores $F(z_i)$;
  b) determination of the analytical maxima of the function $F(z)$; and
  c) determination of the thickness of the transparent film (2) from the analytical maxima of the function $F(z)$.

3. The method as defined in Claim 1,
  **characterized by**
  determination of an approximation function $F(z)$ in the vicinity of those discrete focus scores $F_n(z_i)$ whose adjacent

focus scores $F_{n-m}(z_i)$ and $F_{n+m}(z_i)$ have lower values, the vicinity being defined as $m \geq 1$.

**4.** The method as defined in Claim 2 or 3,
wherein
the focus score $F(z_i)$ is calculated from the difference between the intensities $I_n$ and $I_m$ of adjacent pixels n, m of the camera image recorded in position $z_i$, as

$$F(z_i) = \sum_n \sum_m g\left(\left|I_n - I_m\right|\right), \quad g\left(\left|I_n - I_m\right|\right)$$ being nonlinear.

**5.** An apparatus for carrying out the method for thickness measurement on transparent films as defined in Claim 1, having an object (1) that has a transparent film (2), a light source (3), an objective (5) through which an illumination beam (4), proceeding from the light source (3) and having an optical axis (6) oriented perpendicular to the transparent film (2), is directed onto the object (1);
**characterized by**:

a) a focusing aid (9) equipped with structures arranged in the illumination beam (4) in a position conjugated with the focal plane (8) of the objective (5);
a) a camera (13) arranged in the imaging beam (12) in a position conjugated with the focal plane (8) of the objective (5);
c) a drive unit (14) for displacing the object (1), parallel to the optical axis (6), relative to the objective (5) in the Z direction to discrete positions $z^i$;
d) a Z-position measurement unit (15) for measuring the $z_i$ values of the $z_i$ positions stopped at;
e) an image recording unit (16) connected to the camera (13);
f) an image processing unit (17) for identifying a focus score $F(z_i)$, assigned to one of the respective positions $z_i$, from each recorded camera image, whereby the image of the structure of the focussing aid is used as sharpness indicator
g) a calculation unit (18) for evaluating the focus scores $F(z_i)$ and determining the thickness of the transparent film (2); and
h) a control unit (19), for controlling execution of the method, that is connected to the other units (14, 15, 16, 17, 18).

**6.** The apparatus as defined in Claim 5,
**wherein**
the object (1) is an object support that carries a transparent liquid film.

**7.** The apparatus as defined in Claim 5,
**wherein**
the object (1) is a microcuvette that contains a transparent liquid.

**8.** The apparatus as defined in Claim 5,
**wherein**
the structure on the focusing aid (9) is at least one bar whose bar length is a multiple of the bar width, the bar width being a multiple of the resolution capability of the objective and the camera.

**9.** The apparatus as defined in Claim 8,
**wherein**
the structure on the focusing aid (9) is at least one cross made up of two bars.

**Patentansprüche**

**1.** Verfahren zur Dickenmessung von durchsichtigen Filmen, einschließlich Beleuchtung eines Objekts (1), mit einem durchsichtigen Film (2), durch einen Beleuchtungsstrahl (4), der durch ein Objektiv (5) geführt wird und eine senkrecht zu dem durchsichtigen Film (2) orientierte optische Achse (6) aufweist, **gekennzeichnet durch** die folgenden Schritte:

a) Bereitstellen einer Fokussierungshilfe (9), die mit Strukturen ausgestattet ist, in dem Beleuchtungsstrahl (4) angeordnet, und einer Kamera (13), die in einem Abbildungsstrahl (12) angeordnet ist, in mit der Brennebene (8) des Objektivs (5) konjugierten Positionen;

b) schrittweise Verschiebung des Objektes (1) parallel zur optischen Achse (6) relativ zu dem Objektiv (5) in der Z-Richtung zu diskreten Positionen $z_i$;

c) Aufzeichnen eines Kamerabildes an jeder Stopposition $z_i$ und Messung des assoziierten $z_i$-Wertes;

d) Identifikation einer Fokuspunktzahl $F(z_i)$, der jeweiligen Position $z_i$ zugeordnet, aus jedem aufgezeichneten Kamerabild, wobei das Bild der Struktur der Fukussierhilfe als ein Schärfeindikator verwendet wird;

e) Bestimmung der Maxima der Fokuspunktzahlen $F(z_i)$;

f) Zuordnung der Maxima zu den Grenzflächen des Objekts (1) und

g) Bestimmung der Dicke des in dem Objekt (1) eingeschlossenen durchsichtigen Films (2) an Hand der Differenz zwischen den zwei $z_i$-Positionen $z_1$, $z_2$ der seinen Grenzflächen zugeordneten Maxima, wobei die Dicke d des durchsichtigen Films (2) gegeben ist **durch** $d = (z_1 - z_2) \cdot n_{film}$, wobei $n_{film} =$ der Brechungsindex des Films ist.

2. Verfahren nach Anspruch 1,
**gekennzeichnet durch** die weiteren Schritte:

   a) Bestimmung einer approximierenden Funktion $F(z)$ aus den diskreten Fokuspunktzahlen $F(z_i)$;
   b) Bestimmung der analytischen Maxima der Funktion $F(z)$ und
   c) Bestimmung der Dicke des durchsichtigen Films (2) an Hand der analytischen Maxima der Funktion $F(z)$.

3. Verfahren nach Anspruch 1,
**gekennzeichnet durch**
Bestimmen einer Approximationsfunktion $F(z)$ in der Nähe jener diskreten Fokuspunktzahlen $F_n(z_i)$, deren benachbarte Fokuspunktzahlen $F_{n-m}(z_i)$ und $F_{n+m}(z_i)$ niedrigere Werte aufweisen, wobei die Nähe definiert ist als $m \geq 1$.

4. Verfahren nach Anspruch 2 oder 3,
**wobei**
an Hand der Differenz zwischen den Intensitäten $I_n$ und $I_m$ von benachbarten Pixeln n, m des in Position $z_i$ aufgezeichneten Kamerabildes berechnet wird, daß die Fokuspunktzahl

$$F(z_i) = \sum_n \sum_m g(|I_n - I_m|), \quad g(|I_n - I_m|) \text{ nicht linear ist.}$$

5. Vorrichtung zum Durchführen des Verfahrens zur Dickenmessung von durchsichtigen Filmen nach Anspruch 1, mit einem Objekt (1), das einen durchsichtigen Film (2) aufweist, einer Lichtquelle (3) einem Objektiv (5), durch das ein von der Lichtquelle (3) ausgehender und eine senkrecht zum durchsichtigen Film (2) orientierte optische Achse (6) aufweisender Beleuchtungsstrahl (4) auf das Objekt (1) gerichtet wird;
**gekennzeichnet durch**:

   a) eine Fokussierungshilfe (9), die mit Strukturen ausgestattet ist, in dem Beleuchtungsstrahl (4) in einer mit der Brennebene (8) des Objektivs (5) konjugierten Position angeordnet;
   b) eine in dem Abbildungsstrahl (12) in einer mit der Brennebene (8) des Objektivs (5) konjugierte Position angeordnete Kamera (13);
   c) eine Antriebseinheit (14) zum Verschieben des Objekts (1) parallel zu der optischen Achse (6) relativ zu dem Objekt (5) in der Z-Richtung zu diskreten Positionen $z_i$;
   d) eine Z-Position-Meßeinheit (15) zum Messen der $z_i$-Werte der $z_i$-Positionen, an denen angehalten wird;
   e) eine an die Kamera (13) angeschlossene Bildaufzeichnungseinheit (16);
   f) eine Bildverarbeitungseinheit (17) zum Identifizieren einer Fokuspunktzahl $F(z_i)$, einer der jeweiligen Positionen $z_i$ zugewiesen, von jedem aufgezeichneten Kamerabild, wobei das Bild der Struktur der Fokussierungshilfe als Schärfeindikator verwendet wird;
   g) eine Berechnungseinheit (18) zum Evaluieren der Fokuspunktzahlen $F(z_i)$ und Bestimmen der Dicke des durchsichtigen Filmes (2) und
   h) eine Steuereinheit (19) zum Steuern der Ausführung des Verfahrens, die an die anderen Einheiten (14, 15, 16, 17, 18) angeschlossen ist.

6. Vorrichtung nach Anspruch 5,
**wobei**
das Objekt (1) ein Objektträger ist, der einen durchsichtigen flüssigen Film trägt.

**7.** Vorrichtung nach Anspruch 5,
**wobei**
das Objekt (1) eine Mikroküvette ist, die eine durchsichtige Flüssigkeit enthält.

**8.** Vorrichtung nach Anspruch 5,
**wobei**
die Struktur auf der Fokussierungshilfe (9) mindestens ein Stab ist, dessen Stablänge ein Mehrfaches der Stabbreite ist, wobei die Stabbreite ein Mehrfaches der Auflösungsfähigkeit des Objektivs und der Kamera ist.

**9.** Vorrichtung nach Anspruch 8,
**wobei**
die Struktur auf der Fokussierungshilfe (9) ein mindestens aus zwei Stäben gebildetes Kreuz ist.

**Revendications**

**1.** Procédé de mesure de l'épaisseur de films transparents, comprenant l'éclairage d'un objet (1), comportant un film transparent (2), par un faisceau d'éclairage (4) qui est guidé à travers un objectif (5) et qui possède un axe optique (6) orienté perpendiculairement au film transparent (2), **caractérisé par** les étapes suivantes :

a) mise en place d'un dispositif d'aide à la focalisation (9) équipé de structures disposées dans le faisceau d'éclairage (4), et d'une caméra (13) disposée dans un faisceau d'imagerie (12), dans des positions conjuguées avec le plan focal (8) de l'objectif (5) ;
b) déplacement pas à pas de l'objet (1) parallèlement à l'axe optique (6) par rapport à l'objectif (5) dans la direction Z jusqu'à des positions discrètes $z_i$ ;
c) enregistrement d'une image de caméra à chaque position d'arrêt $z_i$, et mesure de la valeur $z_i$ associée ;
d) identification d'un score de focalisation $F(z_i)$, assigné à la position respective $z_i$, à partir de chaque image de caméra enregistrée, l'image de la structure du dispositif d'aide à la focalisation étant utilisée comme indicateur de netteté ;
e) détermination des maxima des scores de focalisation $F(z_i)$ ;
f) assignation des maxima aux interfaces de l'objet (1) ; et
g) détermination de l'épaisseur du film transparent (2) contenu dans l'objet (1) à partir de la différence entre les deux positions $z_i$ $(z_i, z_2)$ des maxima assignés à ses interfaces, l'épaisseur d du film transparent (2) étant donnée par d = $(z_i - z_2)$ * $n_{film}$, où $n_{film}$ désigne l'indice de réfraction du film.

**2.** Procédé selon la revendication 1, **caractérisé par** les étapes supplémentaires suivantes :

a) détermination d'une fonction d'approximation F(z) à partir des scores de focalisation discrets $F(z_i)$ ;
b) détermination des maxima analytiques de la fonction F(z) ; et
c) détermination de l'épaisseur du film transparent (2) à partir des maxima analytiques de la fonction F(z).

**3.** Procédé selon la revendication 1, **caractérisé par** la détermination d'une fonction d'approximation F(z) au voisinage des scores de focalisation discrets $F_n(z_i)$ dont les scores de focalisation adjacents $F_{n-m}(z_i)$ et $F_{n+m}(z_i)$ ont des valeurs inférieures, le voisinage étant défini comme m $\geq$ 1.

**4.** Procédé selon la revendication 2 ou 3, dans lequel le score de focalisation $F(z_i)$ est calculé à partir de la différence entre les intensités $I_n$ et $I_m$ de pixels adjacents n, m de l'image de caméra enregistrée dans la position $z_i$, comme

$$F(z_i) = \sum_n \sum_m g(|I_n - I_m|), \quad g(|I_n - I_m|) \text{ étant non linéaire.}$$

**5.** Appareil pour mettre en oeuvre le procédé de mesure de l'épaisseur de films transparents selon la revendication 1, ayant un objet (1) qui comporte un film transparent (2), une source de lumière (3), un objectif (5) à travers lequel un faisceau d'éclairage (4), provenant de la source de lumière (3) et possédant un axe optique (6) orienté perpendiculairement au film transparent (2), est dirigé sur l'objet (1) ;
**caractérisé par** :

a) un dispositif d'aide à la focalisation (9) équipé de structures disposées dans le faisceau d'éclairage (4) dans une position conjuguée avec le plan focal (8) de l'objectif (5) ;

b) une caméra (13) disposée dans le faisceau d'imagerie (12) dans une position conjuguée avec le plan focal (8) de l'objectif (5) ;

c) une unité d'entraînement (14) pour déplacer l'objet (1) parallèlement à l'axe optique (6) par rapport à l'objectif (5) dans la direction Z jusqu'à des positions discrètes $z_i$ ;

d) une unité de mesure de position Z (15) pour mesurer les valeurs $z_i$ des positions d'arrêt $z_i$ ;

e) une unité d'enregistrement d'image (16) reliée à la caméra (13) ;

f) une unité de traitement d'image (17) pour identifier un score de focalisation $F(z_i)$, assigné à l'une des positions $z_i$ respectives, à partir de chaque image de caméra enregistrée, l'image de la structure du dispositif d'aide à la focalisation étant utilisée comme indicateur de netteté ;

g) une unité de calcul (18) pour évaluer les scores de focalisation $F(z_i)$ et déterminer l'épaisseur du film transparent (2) ; et

h) une unité de commande (19) pour contrôler l'exécution du procédé, qui est reliée aux autres unités (14, 15, 16, 17, 18).

6. Appareil selon la revendication 5, dans lequel l'objet (1) est un support d'objet qui porte un film liquide transparent.

7. Appareil selon la revendication 5, dans lequel l'objet (1) est une microcuvette qui contient un liquide transparent.

8. Appareil selon la revendication 5, dans lequel la structure du dispositif d'aide à la focalisation (9) est au moins une barre dont la longueur de barre est un multiple de la largeur de barre, la largeur de barre étant un multiple de la capacité de résolution de l'objectif et de la caméra.

9. Appareil selon la revendication 8, dans lequel la structure du dispositif d'aide à la focalisation (9) est au moins une croix composée de deux barres.

Fig. 1

Fig.2

Fig.3

Fig. 4

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0644399 A2
- US 4644617 A
- US 5696589 A
- US 4920273 A